# EUROPÄISCHE PATENTSCHRIFT

(11) **EP 2 545 782 B1**
(45) Veröffentlichungstag und Bekanntmachung des Hinweises auf die Patenterteilung: **03.04.2019**
(21) Anmeldenummer: 12167324.8
(22) Anmeldetag: 09.05.2012
(51) Int. Cl.: A23B 4/28, A23L 3/358

(54) **Nadelregister**
Needle register
Système d'aiguilles

(30) Priorität: 12.07.2011 DE 202011050701 U
(43) Veröffentlichungstag der Anmeldung: 16.01.2013
(73) Patentinhaber: Schröder Maschinenbau KG, 33824 Werther (DE)
(72) Erfinder: Danwerth, Peter J., 33803 Steinhagen (DE); Umbach, Christoph, 33824 Werther (DE); Lipsch, Peter, 49201 Dissen a.T.W. (DE)
(74) Vertreter: Ter Meer Steinmeister & Partner

(56) Entgegenhaltungen:
- EP-A1- 0 327 738
- EP-A1- 1 402 783
- EP-A1- 1 607 001
- EP-A1- 2 153 728
- DE-A1- 19 719 416
- DE-A1- 19 827 685
- US-A- 4 690 046
- US-A- 5 012 728
- US-A- 5 638 744
- US-B1- 6 658 990

## Beschreibung

Die Erfindung betrifft ein Nadelregister für Injektionsvorrichtungen zur Injektion von Flüssigkeit in Lebensmittelprodukte, mit einem Nadelträger, der eine Verteilerkammer für die Flüssigkeit bildet, und mehreren parallelen, hohlen Nadeln, die so an dem Nadelträger gehalten sind, dass ihre offenen oberen Enden in der Verteilerkammer liegen.

Aus DE 10 2004 029 158 B3 ist ein Nadelregister dieser Art bekannt, bei dem die Nadeln einzeln in einem Boden der Verteilerkammer befestigt sind. Ähnliche Nadelregister zeigen US 5 012 728 A, DE 198 27 685 A1, US 6 658 990 B1, EP 0 327 738 A1 und DE 197 19 416 A1.

Aufgabe der Erfindung ist es, ein Nadelregister zu schaffen, das ein einfacheres Auswechseln der Nadeln ermöglicht.

Diese Aufgabe wird erfindungsgemäß dadurch gelöst, dass die Nadeln jeweils im Bereich des oberen Endes einen Kragen aufweisen, und dass die Verteilerkammer mindestens ein Paar übereinander liegender Lochplatten aufnimmt, zwischen denen die Kragen mehrerer Nadeln sandwichartig gehalten sind und die zusammen mit den Nadeln als eine Einheit aus dem Nadelregister entnehmbar sind.

Über die Löcher der oberen Lochplatte sind die Öffnungen der Nadeln zugänglich, während die Nadeln selbst sich durch die Löcher der unteren Lochplatte erstrecken und mit ihren Kragen sandwichartig zwischen den beiden Lochplatten gehalten sind. Nach dem Öffnen der Verteilerkammer lässt sich das Paar der Lochplatten mit den daran fixierten Nadeln einfach mit einem einzigen Handgriff entnehmen. Ebenso einfach kann eine neue Einheit aus Nadeln und zugehörigen Lochplatten in das Nadelregister eingesetzt werden. Andererseits ist auch ein einfaches Auswechseln einzelner Nadeln möglich, indem die beiden Lochplatten voneinander gelöst werden und dann die auszuwechselnden Nadel aus dem Loch der unteren Lochplatte herausgezogen wird.

Vorteilhafte Ausgestaltungen sind in den Unteransprüchen angegeben.

Vorteilhafte Ausgestaltungen sind in den Unteransprüchen angegeben.

Vorzugsweise nimmt das Nadelregister mehrere Paare von Lochplatten auf, die zusammen den Boden der Verteilerkammer bedecken. Dadurch wird erreicht, dass die einzelnen Einheiten aus Lochplatten und Nadeln eine bequem handhabbare Größe haben.

Die beiden übereinander liegenden Lochplatten eines Paares können beispielsweise mit Schrauben, durch Klammern und auf sonstige Weise miteinander verspannt werden. Ebenso ist es auch möglich, die beiden Lochplatten gemeinsam gegen den Boden der Verteilerkammer zu spannen.

Im folgenden wird ein Ausführungsbeispiel anhand der Zeichnung näher erläutert.

Es zeigen:
- Fig. 1: einen Teilschnitt durch ein erfindungsgemäßes Nadelregister;
- Fig. 2: eine Detailvergrößerung zu Fig. 1;
- Fig. 3: das Nadelregister nach Fig. 1 mit geöffneter Verteilerkammer in einer Ansicht von oben; und
- Fig. 4: einen Schnitt durch eine Nadel/Lochplatten-Einheit.

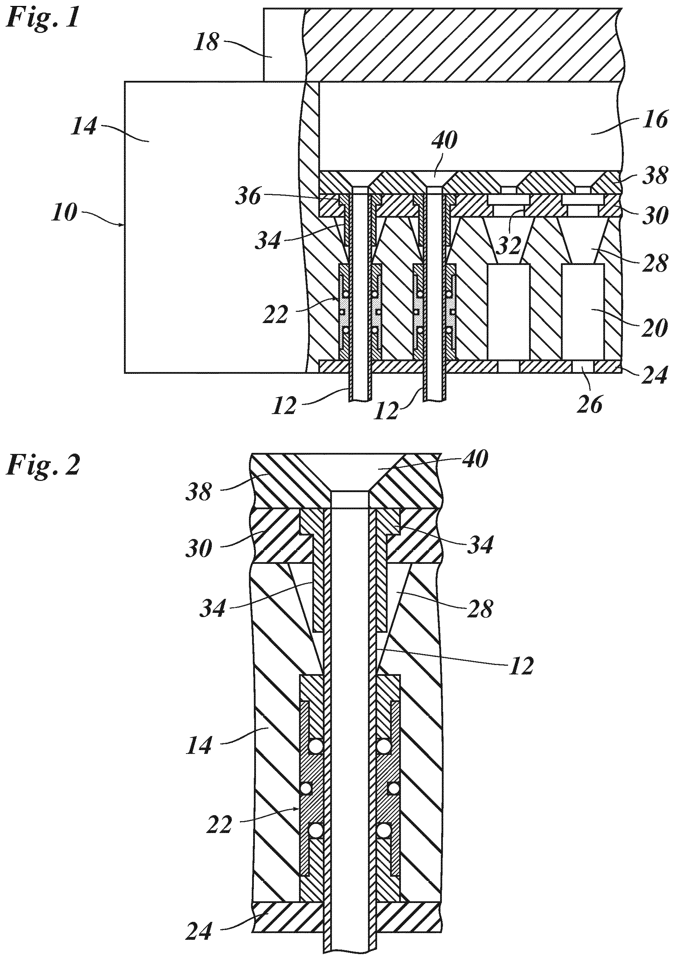

In Fig. 1 ist ein Teil eines Nadelregisters dargestellt, das beispielsweise in einem Pökelinjektor dazu dient, Pökellake in Fleischstücke zu injizieren. Das Nadelregister weist einen Nadelträger 10 auf, an dem mehrere hohle Nadeln 12 befestigt sind, die sich von dem Nadelträger 10 aus senkrecht nach unten erstrecken. In dem Pökelinjektor ist der Nadelträger 10 vertikalbeweglich über einem nicht gezeigten Förderer angeordnet, auf dem die Fleischstücke zugeführt werden. Wenn der Nadelträger abgesenkt wird, stechen die Nadeln 12 in das Fleisch ein, so dass die Pökellage injiziert werden kann.

Der Nadelträger 10 wird durch einen Block 14 aus einem lebensmittelverträglichen Kunststoff gebildet, in dem an der Oberseite eine verhältnismäßig flache, nach oben offene Verteilerkammer 16 ausgespart ist. Durch eine auf den Block 14 aufgespannte Deckplatte 18 kann die Verteilerkammer 16 druckdicht verschlossen werden. Ein Endabschnitt des Blockes 14, links in Fig. 1, nimmt eine nicht näher gezeigte Ventileinrichtung auf, mit der Pökellage unter Druck in die Verteilerkammer 16 zugeführt werden kann.

Die Nadeln 12 liegen mit ihren offenen oberen Enden in der Verteilerkammer 16, so dass sich die Pökellage gleichmäßig auf de Nadeln verteilt und über diese in das Fleisch injiziert werden kann. Der Teil des Blockes 14, der den Boden der Verteilerkammer 16 bildet, weist für jede der Nadeln 12 eine nach unten offene Dichtungskammer 20 auf, die eine elastische Dichtungspackung 22 für die Nadel aufnimmt. Am unteren Ende sind die Dichtungskammern 20 durch eine Abschlussplatte 24 abgeschlossen, die Bohrungen 26 für den Durchtritt der Nadeln 12 aufweist.

Nach oben schließt sich an jede Dichtungskammer 20 ein Kanal 28 an, der sich nach oben konisch zur Verteilerkammer 16 erweitert.

Auf dem Boden der Verteilerkammer 16 liegt eine untere Lochplatte 30 auf, die für jede Nadel ein abgestuftes Durchgangsloch 32 aufweist. Auf dem oberen Ende jeder Nadel 12 ist eine Hülse 34 befestigt, beispielsweise aufgequetscht, die am oberen, mit dem oberen Ende der Nadel bündigen Ende einen umlaufenden Kragen 36 bildet. Dieser Kragen 36 ist in den erweiterten oberen Teil des Durchgangsloches 32 eingepasst, so dass seine obere Oberfläche mit der Oberfläche der Lochplatte 30 bündig ist und der Kragen sich auf der Abstufung des Durchgangsloches 32 abstützt. Der unterhalb des Kragens 36 liegende Teil der Hülse 34 erstreckt sich passend durch den engeren unteren Teil des Durchgangsloches 32 und ist mit seinem unteren Ende in dem konischen Kanal 28 aufgenommen.

Jede Nadel 12 wird somit durch einen Kragen 36 so an der unteren Lochplatte 30 abgestützt, so dass sie nicht nach unten aus dem Nadelträger 10 herausgezogen werden kann.

Auf der unteren Lochplatte 30 liegt eine obere Lochplatte 38 auf, die für jede Nadel ein Durchgangsloch 40 aufweist. Das Durchgangsloch 40 hat einen zylindrischen unteren Teil, der mit der oberen Öffnung der Nadel 12 bündig ist und an den sich nach oben ein konisch erweiterter Teil anschließt, der einen störungsfreien Einstrom der Lake aus der Verteilerkammer 16 in die Nadel ermöglicht.

Die oberen und unteren Lochplatten 38, 30 sind fest miteinander und mit dem Block 14 zusammengehalten, so dass der Kragen 36 jeder Nadel sandwichartig und spielfrei zwischen den Lochplatten aufgenommen wird. Wenn eine Nadel 12 beim Einstechen in das Fleisch einer aufwärts gerichteten Kraft ausgesetzt ist, so stützt sie sich mit ihrem Kragen 36 an der oberen Lochplatte 38 ab.

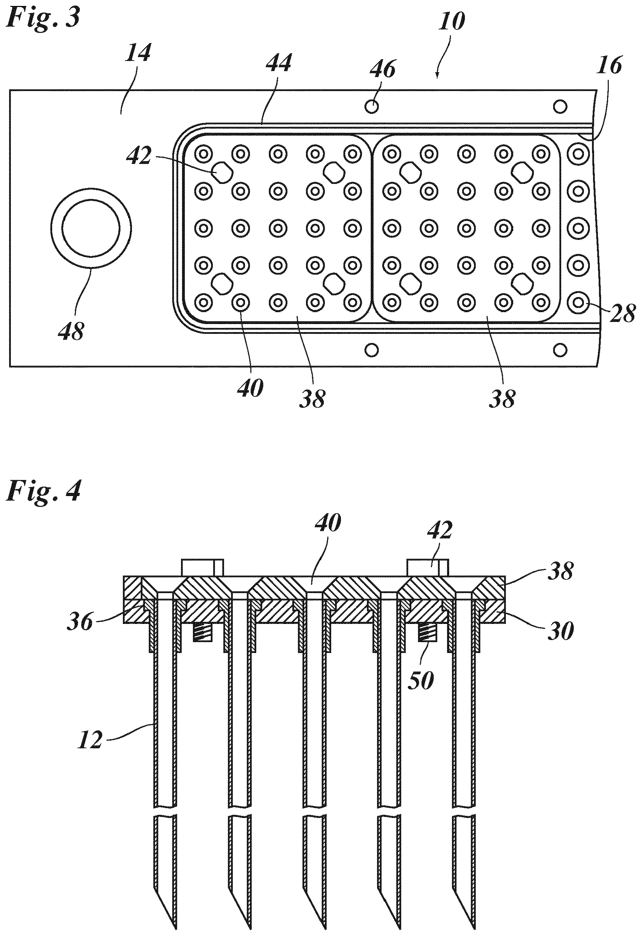

Fig. 3 zeigt das Nadelregister bei abgenommener Deckplatte in einer Ansicht von oben. Man erkennt, dass die Verteilerkammer 16 die Grundrissform eines langgestreckten Rechtecks mit abgerundeten Ecken hat, in das mehrere Paare von Lochplatten (zu sehen sind hier nur die oberen Lochplatten 38) passend eingesetzt sind, so dass sie den gesamten Boden der Verteilerkammer bedecken. Jede Lochplatte hat einen quadratischen, an den Ecken abgerundeten Grundriss und nimmt Durchgangslöcher 40 für 5 x 5 Nadeln auf. Auf Lücke versetzt zu den Durchgangslöchern 40 sind die Köpfe von vier Schrauben 42 zu erkennen, mit denen die oberen und unteren Lochplatten am Boden der Verteilerkammer 16 fixiert werden.

Auf der Oberseite des Blockes 14 ist um den Rand der Verteilerkammer 16 herum eine Dichtung 44 vorgesehen, mit der bei aufgeklemmter Deckplatte 18 die Fuge zwischen dem Block 14 und der Deckplatte 18 abgedichtet wird. Weiterhin sind Spannbolzen 46 zu erkennen, mit denen die Deckplatte 18 fest gegen die Oberseite des Blockes 14 gespannt werden kann. In dem außerhalb der Verteilerkammer 16 gelegenen Endabschnitten weist der Block 14 Bohrungen 48 für nicht gezeigte Führungsstangen auf, mit denen das Nadelregister vertikalbeweglich am Pökelinjektor geführt ist.

Wenn die Schrauben 42 gelöst wurden, lassen sich die untere Lochplatte 30, die zugehörige obere Lochplatte 38 und die an diesen Lochplatten gehaltenen fünfundzwanzig Nadeln als eine Einheit aus dem Nadelträger 10 entnehmen. In Fig. 4 ist eine einzelne solcher Einheiten im Schnitt dargestellt. Die Schrauben 42 erstrecken sich mit ihren Gewindeschäften 50 durch miteinander fluchtende Bohrungen der Lochplatten 30, 38 und können nach dem Einsetzen der Einheit in die Verteilerkammer 16 in entsprechende Gewindebohrungen im Boden der Verteilerkammer eingeschraubt werden, so dass die Köpfe der Schrauben 42 die Lochplatten 30, 38 fest gegen den Boden der Verteilerkammer spannen.

In dem in Fig. 4 gezeigten Zustand lässt sich die obere Lochplatte 38 abnehmen, so dass die Nadeln 12 mit den Hülsen, die die Kragen 36 bilden, einzeln nach oben aus den Löchern der Lochplatte 30 herausgezogen werden können.

Die Dichtungspackungen 22 (Fig. 1 und 2) sind vorzugsweise so beschaffen, dass ihre elastischen Dichtungen die Abdichtung von Nadeln 12 mit unterschiedlichen Durchmessern gestatten. Wenn das Nadelregister für einen anderen Verwendungszweck umgerüstet werden soll, lassen sich die Nadeln 12 mit Hilfe der Lochplatten 30, 38 bequem aus dem Nadelträger 10 entfernen und durch Nadeln mit einem anderen Durchmesser ersetzen. Für diese Nadeln werden dann obere und untere Lochplatten 30, 38 verwendet, bei denen die Durchmesser der Durchgangslöcher 32 und 40 entsprechend angepasst sind.

## Patentansprüche

1. Nadelregister für Injektionsvorrichtungen zur Injektion von Flüssigkeit in Lebensmittelprodukte, mit einem Nadelträger (10), der eine Verteilerkammer (16) für die Flüssigkeit bildet, und mehreren parallelen, hohlen Nadeln (12), die so an dem Nadelträger (10) gehalten sind, dass ihre offenen oberen Enden in der Verteilerkammer (16) liegen, **dadurch gekennzeichnet, dass** die Nadeln (12) jeweils im Bereich des oberen Endes einen Kragen (36) aufweisen, und dass die Verteilerkammer (16) mindestens ein Paar übereinander liegender Lochplatten (30, 38) aufnimmt, zwischen denen die Kragen (36) mehrerer Nadeln (12) sandwichartig gehalten sind und die zusammen mit den Nadeln als eine Einheit aus dem Nadelregister entnehmbar sind.

2. Nadelregister nach Anspruch 1, bei dem die Verteilerkammer (16) mehrere Paare von Lochplatten (30, 38) mit zugehörigen Nadeln (12) aufnimmt.

3. Nadelregister nach Anspruch 1, bei dem die übereinander liegenden Lochplatten (30, 38) lösbar zusammengehalten sind.

4. Nadelregister nach Anspruch 3, bei dem die übereinander liegenden Lochplatten (30, 38) mit Schrauben (42) gegen den Boden der Verteilerkammer (16) gespannt sind,

5. Nadelregister nach einem der vorstehenden Ansprüche, bei dem die Kragen (36) der Nadeln in abgestuften Durchgangslöchern (32) der unteren Lochplatte (30) aufgenommen sind.

6. Nadelträger nach Anspruch 5, bei dem die oberen Enden der Nadeln (12) und die oberen Oberflächen der Kragen (36) mit der oberen Oberfläche der unteren Lochplatte (30) bündig sind.

7. Nadelträger nach einem der vorstehenden Ansprüche, bei dem die obere Lochplatte (38) Durchgangslöcher (40) aufweist, die mit den oberen Enden der Nadeln (12) fluchten und sich nach oben konisch erweitern.

8. Nadelregister nach einem der vorstehenden Ansprüche, bei dem jede Nadel (12) eine elastische Dichtungspackung (22) durchsetzt, die in dem Boden der Verteilerkammer (16) eingelassen ist.

## Claims

1. Needle register for injection devices for injecting liquid into food products, the needle register comprising a needle carrier (10) forming a distribution chamber (16) for the liquid, and a plurality of parallel hollow needles (12) that are mounted on the needle carrier (10) such that their open top ends are located within the distribution chamber (16), **characterized in that** the needles (12) have a respective collar (36) in the region of their top end, and the distribution chamber (16) accommodates at least two superposed perforated plates (30, 38) between which the collars (36) of a plurality of needles (12) are sandwiched and which, together with the needles, can be withdrawn from the needle register as a unit.

2. The needle register according to claim 1, wherein the distribution chamber (16) accommodates a plurality of pairs of perforated plates (30, 38) with their respective needles (12).

3. The needle register according to claim 1, wherein the superposed perforated plates (30, 39) are detachably held together.

4. The needle register according to claim 3, wherein the superposed perforated plates (30, 38) are biased against the bottom of the distribution chamber (16) by means of bolts (42).

5. The needle register according to any of the preceding claims, wherein the collars (36) of the needles are received in stepped through-holes (32) of the lower perforated plate (30).

6. The needle register according to claim 5, wherein the top ends of the needles (12) and the top surfaces of the collars (36) are flush with the top surface of the lower perforated plate (30).

7. The needle carrier according to any of the preceding claims, wherein the upper perforated plate (38) has through-holes (40) that are flush with the top ends of the needles (12) and upwardly flare-out conically.

8. The needle register according to any of the preceding claims, wherein each needle (12) penetrates an elastic seal packing (22) that is embedded in the bottom of the distribution chamber (16).

## Revendications

1. Système d'aiguilles pour dispositifs d'injection destinés à l'injection de liquide dans des produits alimentaires, avec un support d'aiguilles (10), qui forme une chambre de distribution (16) pour le liquide, et avec plusieurs aiguilles (12) creuses parallèles qui sont retenues sur le support d'aiguilles (10) de telle sorte que leurs extrémités supérieures ouvertes sont situées dans la chambre de distribution (16), **caractérisé en ce que** les aiguilles (12) comportent respectivement dans la zone de l'extrémité supérieure une collerette (36), et **en ce que** la chambre de distribution (16) reçoit au moins une paire de plaques perforées (30, 38) superposées entre lesquelles les collerettes (36) de plusieurs aiguilles (12) sont retenues en sandwich et qui, conjointement avec les aiguilles, peuvent être enlevées du système d'aiguilles en tant qu'unité.

2. Système d'aiguilles selon la revendication 1, dans lequel la chambre de distribution (16) reçoit plusieurs paires de plaques perforées (30, 38) avec des aiguilles (12) correspondantes.

3. Système d'aiguilles selon la revendication 1, dans lequel les plaques perforées (30, 38) superposées sont retenues ensemble de façon détachable.

4. Système d'aiguilles selon la revendication 3, dans lequel les plaques perforées (30, 38) superposées sont serrées par des vis (42) contre le fond de la chambre de distribution (16).

5. Système d'aiguilles selon l'une des revendications précédentes, dans lequel les collerettes (36) des aiguilles sont reçues dans des trous traversants (32) étagés de la plaque perforée (30) inférieure.

6. Système d'aiguilles selon la revendication 5, dans lequel les extrémités supérieures des aiguilles (12) et les surfaces supérieures des collerettes (36) sont en affleurement avec la surface supérieure de la plaque perforée (30) inférieure.

7. Système d'aiguilles selon l'une des revendications précédentes, dans lequel la plaque perforée (38) supérieure comporte des trous traversants (40) qui sont en affleurement avec les extrémités supérieures des aiguilles (12) et s'élargissent en cône vers le haut.

8. Système d'aiguilles selon l'une des revendications précédentes, dans lequel chaque aiguille (12) pénètre dans une garniture d'étanchéité (22) élastique qui est intégrée dans le fond de la chambre de distribution (16).
